# EUROPEAN PATENT APPLICATION

(11) **EP 3 859 617 A1**
(43) Date of publication of application: **04.08.2021**
(21) Application number: 19795371.4
(22) Date of filing: 19.09.2019
(51) Int. Cl.: G06Q 10/06

(54) **METHOD FOR DECISION SUPPORT AND IMPACT ASSESSMENT FOR INNOVATION AND KNOWLEDGE PROGRAMS BASED ON RESEARCH AND TECHNOLOGICAL DEVELOPMENT IN ORGANIZATIONS**

(30) Priority: 25.09.2018 PT 2018115040
(71) Applicant: Raiz - Instituto De Investigação Da Floresta E Papel, 3800-783 Eixo, Aveiro (PT)
(72) Inventor: DE OLIVEIRA MONTEIRO, Sara Paulina, 3801-501 EIXO (PT)
(86) International application number: PCT/PT2019/050033
(87) International publication number: WO 2020/067911

(57) **Abstract**

The present invention relates to the framework of supporting organizations on the decision and impact evaluation of innovation and knowledge programs based in technological research and development, being a multi-level flexible/adaptable and cross-sector methodology for the management and evaluation of the value co-created by innovation, research and development activities, capable of identifying economical and societal value, intangible assets, anticipating and measuring efficiency and effectiveness, and allowing to analyze causalities.

The methodology supports the leadership role into the corporate strategy in the innovation, R&D decisions and consists of four sequential and interconnected steps: pre-evaluation of the program upon submission, with the possibility of programs prioritization; weighting the annual increment of key performance indicators for each organization; evaluation of the program at its terminus, with the possibility of cause-effect analysis; and evaluation of the impact of all RTD activities in the medium - long term, with a period of 2.5-5 years.

## Description

### FIELD OF THE INVENTION

The methodology presented in this document belongs to the field of impact assessment of innovation programs, aiming to be a tool for supporting strategic decision making by companies and research centers managers dealing with fast and sustained decision making. It makes possible to obtain a set of information / data which enable different analysis through organizations, sectors, countries and even a cause-effect analysis.

### BACKGROUND OF THE INVENTION

Organizational innovation impact assessment methodologies are the subject of intense theoretical and empirical developments, as found when looking at the economic and science and knowledge management literature. The major issue found is how it to implement the methodologies, as the majority of the scientific production and empirical knowledge agrees that there is a need for a flexible, adjustable methodology that can combine several multi-level indicators in the decision-making process.

Several seminal works identify this problematic namely, Mansfield et al. (Mansfied, E., Rapoport, J., Schnee, J., Wagner, S. and Hamburger, M. (1971), Research and Innovation in the Modern Corporation, New York: Norton); Griliches (Griliches, Z. (1979), Issues in assessing the contribution of research and development to productive growth. Bell Journal of Economics, The RAND Corporation, 10 (1), 92-11 6nd social returns to research and development); Hall (The private and social returns to research and development. In B. L.R.Smith and C. E. Barfield Technology,R&D, (eds), Technology, R&D, and the economy (pp140-183). Washington. The Brookings Institution a); David et al. (David P. A., Hall B., Toole A (1999), Is Public R&D a Complement or a Substitute for Private R&D? A Review for the Econometric Evidence (NBER working papers 7373), Cambridge: National Bureau of Economic Research, inc.). Other works in this area, with applications on Technological Research and Development are namely Hall et al. 2010, 2013 (Hall B., Mairesse, J. and Mohen P. (2010), Measuring the Returns to R&D, in Handbook of the economics of innovation. Amsterdam: North Holland); Chiesa e Frattini, 2009 (Chiesa, V. and Frattini, F. (2009), Evaluation and Performance Measurement of Research and Development. Techniques and Perspectives for Multi-level Analysis. Cheltenham: Edward Elgar). With case studies demonstrating the relevance of applying these methodologies, but also highlighting the difficulties organizations have to deal with in measuring the impact of innovation, even when using methodologies such as the Innovation Scorecard, we can find Dewangan e Godse (Dewangan, V. and Godse, M. (2014), Towards a Holistic Enterprise Innovation Performance Measurement System, Technoinnovation, 34(9), 536-545) and Gama et al. (Gama, N., Silva, M. and Ataíde J. (2007), Innovation Scorecard: A Balanced Scorecard for Measuring the Value Added by Innovation, in P.F Cunha and P.G Maropoulus (Eds), Digital Enterprise Technology (pp 417:424). Boston: Springer US). Accordingly to Salter and Alexy (Salter A. and Alexy O. (2014), The Nature of Innovation. In the Oxford Handbook of Innovation Management. New York: Oxford University Press), the risk and the uncertainty associated with innovation opens up new research opportunities avenues, which require further theoretical developments and new applied tools for enabling new ways of measuring the innovation impact. Chapter 7 of The Quadruple Innovation Helix Nexus: A Smart Growth Model, Quantitative Empirical Validation and Operationalization for OECD Countries, Palgrave Studies in Democracy, Innovation, and Entrepreneurship for Growth, 2017, Monteiro, Sara, Carayannis, Elias G. (Eds.), adresses this topic and concludes that there is a need to deepen and to increase the knowledge based on innovation impact assessment by identifying indicators and metrics that can capture their effects from a systemic approach that addresses the interconnections between innovation actors, innovation lifecycle dynamics and new impact measures. It additonally suggests the creation of a generalizable methodology to be taken by the organizations, which can then more easily identify and apply evaluation indicators of their innovation programs and activities, highlighting the possibility of contributing to evidence-based decisions.

On the other hand, the ongoing digital transformation justifies the development of a digital tool for supporting the integration of the main orientations of the theoretical framework of the new innovation theories for innovation measurement into the management processes of different organizations, contributing for results characterization and evaluation of their effect on performance and competitiveness.

Based on good management practices in this field from the Organization for Economic Co-operation and Development (OECD), European Institute for Administration of Affairs (INSEAD), Massachusetts Institute of Technology (MIT), Oxford, European Commission and the World Bank, this invention stands as a new tool which includes new indicators coming from open innovation processes, from co-innovations, cooperations and co-creations, a tool that is not limited to input and output indicators, but that works in various dynamic and multi-level dimensions, adjustable to different realities, with the necessary simplicity to be of good use to business and research and technological development organizations.

In addition to being a methodology that includes the culture and the values from the perspective of the quadruple-helix theory of innovation, being adjustable (because innovation processes are complex and can be unique), it covers several decision-making stages in innovation processes and offers traceability.

The conceptual system of the quadruple-helix theory of innovation developed by Elias Carayannis and David Campbell in the works from 2006 and 2009 (Carayannis, E.G. and Campbell, D.F.J. 'Introduction and chapter summaries', in Elias, G.C. and Campbell, D.F.J. (Eds.): Knowledge Creation, Diffusion, and use in Innovation Networks and Knowledge Clusters. A Comparative Systems Approach across the United States, Europe and Asia, Praeger, Westport, Connecticut, pp.ix-xxvi; 'Mode 3' and 'Quadruple Helix': toward a 21st century fractal innovation ecosystem by Elias G. Carayannis, David F.J. Campbell, International Journal of Technology Management (IJTM), Vol. 46, No. 3/4, 2009), attempts to explain a new reality in which innovation is produced from the interaction between the four innovation helices. According to these developments, the economic structure of a country is based on four pillars / helices (on the one hand the university, the knowledge and technology production infrastructures, the interface infrastructures and, on the other hand, companies and industry, governments and civil society, whose production units are complementary and interact with each other and are responsible for the knowledge generated and for the continuous innovation that is produced through partnerships, networking and symbiothic relationships. The current context of emerging technologies, biotechnology, nanotechnology and information and communication technologies (BIO-NANO-ICT), the digital revolution, the domain of artificial intelligence, dominated by uncertainty, and the emergence of new forms of governance and new institutions, requires an ever-greater democracy, the one of knowledge, with the affirmation of its values, a growing participation of society, and a growing interaction between companies, industries, centers of knowledge and technology production, including governments.

These interactions must be promoted by state policies (public policies) and constitute the hard core of all formulations of the conceptual system of the quadruple-helix theory of innovation.

This theory enhances cooperation, complementarities and knowledge sharing among actors within innovation ecosystems and refers to mode 3 of knowledge production. Accordingly to Foray et al. (Ortega Argiles, R., Goddard, J., Goenaga, X., Landabaso, M., Morgan, K., Nauwelaers , C., & Foray, D. (2012). Guide to Research and Innovation Strategies for Smart Specialisations (RIS 3). Luxembourg: Publications Office of the European Union) the triple-helix theory is not sufficient to understand and design smart specialization strategies in which innovation users or demand-side groups and perspectives from consumers and non-profit organizations representing the interests of citizens and workers are represented (Foray et al. 2012, p. 22). Mode 3 of knowledge production brings these actors, normally absent from the decision process, to the decision center. Yawson em 2009 (Yawson, Robert M. (2009): The ecological system of innovation: A new architectural framework for a functional evidence-based platform for science and innovation policy. Published in: The Future of Innovation: Proceedings of the XX ISPIM 2009 Conference, Vienna, Austria, June 21-24, 2009) designates them as public. In 2014, Carayannis e Rakhmatullin (Carayannis, E.G. & Rakhmatullin, The Quadruple/Quintuple Innovation Helices and Smart Specialisation Strategies for Sustainable and Inclusive Growth in Europe and Beyond, Journal of the Knowledge Economy, 5(2), 212-239, 2014), emphasize cooperation in the form of competition, co-evolution and co-specialization within and across ecosystems as the basis for defining smart specialization strategies. In 2012, at a conference co-organized by the OECD and the World Bank, participants discussed measures to promote innovation within national innovation systems and public policies to promote university and private sector interactions to promote knowledge diffusion and its dissemination and commercialization. They recognize in the final report, the conceptual system of the quadruple-helix theory of innovation as a potential tool for analyzing the interactions between the different innovation actors and for shaping the future of new industrial policies. The need to create new economic and management models to measure the impact of innovation and emerging technologies and the interaction between innovation actors on the productivity of countries and organizations appears as one of the priority points of the OECD Economic Science and Strategic Management Agenda at the moment.

The author of this patent, in 2013, defended a doctoral thesis in which, for the first time, an analytical economic model was presented that illustrates the quadruple-helix theory of innovation; In 2017, in collaboration with the authors of The Quadruple Helix Theory, she edited a book for Nature where she first tested, empirically the "smart" economic model developed with OECD data (Sara Paulina De Oliveira Monteiro, Elias G. Carayannis, The Quadruple Innovation Helix Nexus, A Smart Growth Model, Quantitative Empirical Validation and Operationalization for OECD Countries, Palgrave Studies in Democracy, Innovation, and Entrepreneurship for Growth, Palgrave Macmillan US, 2017).

This invention now responds to the need of developing an adjustable, dynamic and cross-organizational management tool to identify and quantify, for innovation programs, their economic value and intangible assets created, enabling an assessment of efficiency and effectiveness in the field of strategic corporate management.

In particular the methodology allows:
- to anticipate and measure the performance and impact of an organizational innovation program and of any investment or advisory program, and helps to speed up organization's strategic decisions;
- to support the appropriate planning with the identification and quantification, through an aggregate impact measure consisting of inputs, outputs, outcomes and impacts data;
- to oversee research and development programs and investment programs and their results;
- anticipate impacts and do cause-effect analysis, cross-sectoral and cross-country analyzes;
- maintain the level of ambition and progress towards goals;
- monitor the strategic objectives of various activities;
- provide a roadmap to support strategic decisions about research and development activities within an organization.

Managers can thus, through this methodology, quickly decide and focus on the most pressing programs and activities, ensuring transparent and traceable decisions based on real data and continually evaluated, consequently ensuring consistency between corporate strategy and medium-long term decisions of an organization.

The methodology presented in this document is flexible and adjustable to any organization and sector, containing multi-level indicators in the current systemic approach of innovation systems that encompasses the interconnections, co-creations and co-operations between innovation actors, the dynamics of innovation lifecycles and new impact measures.

The document US20050235252A1 describes a tool that stores innovation data that includes information about an entity's ability to innovate. Innovation data are processed according to at least one metric, where the metrics represent the entity's innovation objectives. This tool works on the concept of an organization's ability to innovate which, according to the definition presented at the patent document, is distinct from the concept impact, and the ability to innovate, according to that document, is the ability of an organization to create something new, and this ability is what distinguishes each organization from the others and makes it unique. They work the organization as a whole and not by innovation programs. With a limited set of indicators, it does not address interactions and co-creations and is very patent-centric. In addition, US20050235252A1 provides little detail on the methodology, namely how it is fed to databases, where the complexity of these methodologies generally resides.

The document US2016117625A1 considers a method for evaluating an organization, which involves series of parameters associated with a first and a second dimension, i.e. corresponding to an "innovation force" existing in the organization and the "future innovation force" of said organization. Based on the first and the second rating, a first and a second score, respectively, are determined. The organization is categorized into one or more watertight categories based on the first and second scores, using general management concepts.

These patents presented, prior to modern theories of innovation, do not integrate a systemic view of innovation nor the assumptions of Mode 3 of knowledge production, the multi-actors, the quadruple-helix concept with governments, civil society, and eco-innovation included, not incorporating indicators that capture these new realities, such as impacts on civil society.

The methodology here presented includes indicators resulting from open innovation processes, co-inventions between industry and university, co-creations and co-operations, not just purely economic input-output indicators and patents.

It works in various dimensions, is dynamic, and is adjustable to the reality or the purpose to be studied, so it has no rigid algorithms, maintaining the necessary simplicity. It includes, for example, the civil society, the eco-innovation, values and culture (institutions) from the perspective of the quadruple innovation helices, because each innovation process is unique and complex. It allows traceability and has several stages of evaluation, supports planning and cause-effect analyses.

The report of the Organization for Economic Cooperation and Development (OCDE) (University-Industry Collaboration: New Evidence and Policy Options, OECD Publishing, Paris, https://doi.org/10.1787/e9c1e648-en), from April 2019, lists limitations of existing tools and presents factors to overcome these disadvantages, which are taken into account by the methodology here presented. In fact, previous methodologies incorporate a view of linear innovation, with the flow of science-industry knowledge transfer being done only unidirectionally and linearly.

The methodology presented in this document is one of the first that incorporates the needs and suggestions presented in the mentioned report, i.e. of a two-way academy-infrastructure interface, interactive with civil society and the government. It is therefore included in the invention herein presented a concept of co-creating knowledge between companies and research units, as described in the same report, enabling innovation ecosystems to benefit optimally from the scientific research carried out.

Thus, the methodology presented here includes levels or helices of innovation that allow for more intense science-industry relations, built as knowledge is developed, either in shared facilities or in multidisciplinary groups, with government and civil society involvement .

The success of the co-creative process, as the OECD report describes, requires new ways of collaboration, new knowledge transfer channels, taken into account through the indicators considered and combined in the methodology here described.

Different methods and data sources can be used to measure knowledge transfer, reflecting the complex nature of science-industry interactions and their multidimensional impacts on innovation. The suitability of data sources and specific methodologies depends on the assessment objectives as well as on the characteristics of the research area and industry sectors analyzed. A multi-method approach combining different data sources and methods is required when the objective is to assess the overall impacts of industry research and innovation.

This is achieved with the methodology proposed here, by combining various methodologies and indicators and can be applied to any sector or country.

Another challenge not addressed by the above documents is the comparison of results across countries and industries and the identification of causal impacts. When only patents are taken into account, as it is the case, only specific aspects are highlighted and not all the dimensions of knowledge.

The methodology presented in this document also considers a comparison between the factors to be analyzed before and after the methodology implementation. Additionally, by systematizing indicators and relative weights, impact measurement is thus facilitated by circumventing the variety of channels through which knowledge transfer can be carried out and the limitation on the number of indicators available.

It is then possible to verify, from the state-of-the-art analysis, the lack of new methodologies to measure innovation impact, which consider a nonlinear representation of innovation, as well as the interactions and different links between the actors concerned, helping to improve decision making based on reliable data. Such limitation is overcome by the methodology here disclosed, considering several levels, being dynamic and adaptable, using new metrics and indicators, and being easily applied to different organizations.

Other technical effects are also associated with this methodology, namely facilitating the implementation and obtaining a multi-level, dynamic, flexible, adjustable and cross-sectional assessment of innovation programs in a computer context and in an automated manner.

The methodology presented here thus allows the generation of an assessment by an automated system that processes alphanumeric data from innovation and knowledge programs based on research and technological development in organizations.

The simplification and quantification associated with this methodology allows for a computational implementation that implies less use of resources, operations and memory and, consequently, being faster.

It also allows computational media to convert alphanumeric information of complex concepts, indicators of the efficiency and effectiveness of program evaluation and research activities, into tabular and graphical forms, which allows alarms to be generated between a company's sirection/administration boards and programmes managers.

This type of results formulation makes this methodology necessarily useful when implemented in a computational context.

### SUMMARY OF THE INVENTION

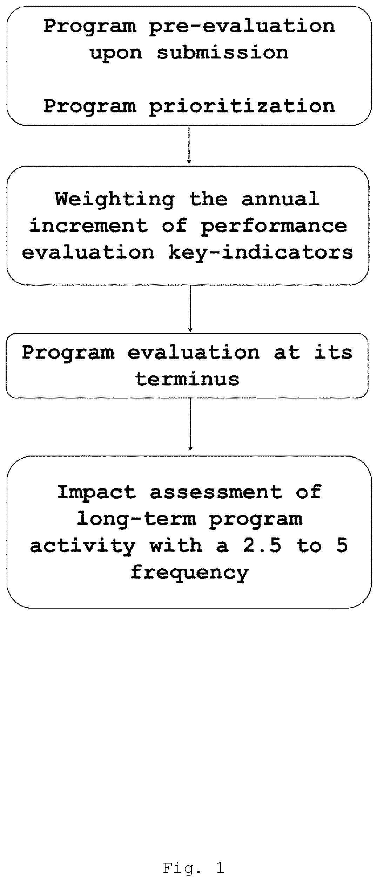

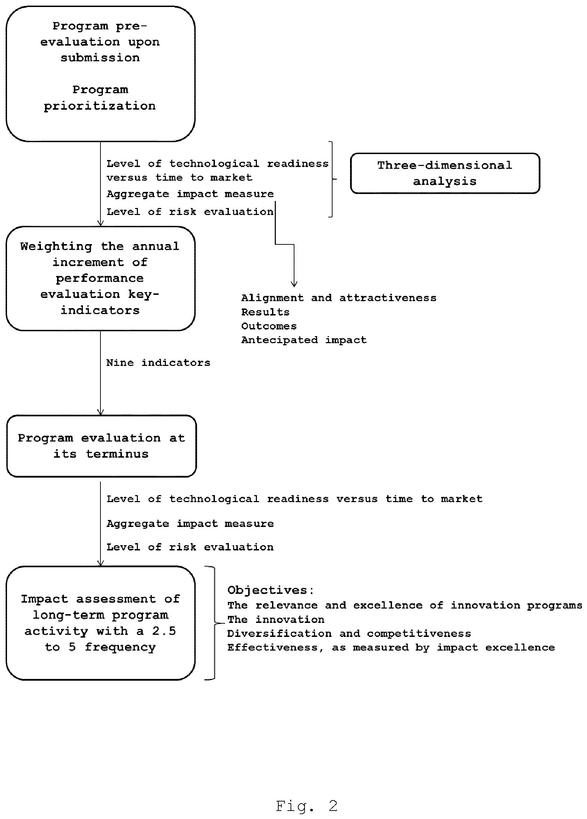

This document proposes a methodology for identifying and quantifying, for innovation programs, their economic value and intangible assets created, allowing an assessment of efficiency and effectiveness, as briefly described in Figure 1 and in more detail in Figure 2.

The first step in this methodology is to collect data on required resources, activities, targets and deliverables by program type and operational area, for a pre-assessment that involves determining a level of technology readiness versus time to market, an aggregate impact measure and a level of risk.

This data collection of required resources, activities, goals and deliverables by program type and operational area is carried out by creating alphanumeric databases in computer processing programs or spreadsheets.

The level of technological readiness versus time to market, the aggregate impact measure and the level of risk are computed through functions parameterized in computer processing programs or spreadsheets.

The aggregate impact measure is calculated using the following formula: 0,30 × a) + 0,20 × b) + 0,20 × c) + 030 × d), in which a) corresponds to the alignment and attractiveness metric, b) corresponds to the outputs metric, c) corresponds to the outcomes metric, and d) corresponds to the anticipated impacts metric. The level of risk is then included in a three-dimensional analysis, which also considers, as vectors, the level of technological readiness versus time to market and the aggregate impact measure and draws some cause-effect conclusions. Still using the three-dimensional analysis, incoporating the anticipated impacts metric, the level of technological readiness versus time to market, complementing with the required resource data and the alignment and attractiveness metric data, a prioritization of the programs can be made during the step of pre-assessment.

The next step in this methodology includes the computation of an annual increment of key performance indicators evaluation towards a target performance evaluation key-indicators towards a target, taking into account different indicators calculated using functions parameterized in computer processing programs or in spreadsheets based on alphanumeric databases of these indicators.

This is followed by the evaluation of the program at its terminus, which includes the definition of what was actually accomplished and the re-computation of the level of technological readiness versus time to market, the aggregate impact measure and the level of risk.

The final step of this methodology includes the long-term impact assessment of the program activity, with a 2.5-5 year frequency, which includes the definition of 4 objectives, 9 key performance indicators and 23 sub-key performance indicators.

These operations are necessarily carried out by computer support, by incorporating information into a database and using / introducing calculation algorithms, which can also be available on ordinary personal computers. This computational base provides a quick overview, namely through the generation of results computed by functions parameterized in computer processing programs or spreadsheets, in the form of tables and graphs, which allows the constant evaluation of innovation programs through the generation of alarms between the administration boards and program managers of a corporation.

There is then, a final step of presenting results computed by functions parameterized in computer processing programs or spreadsheets in a tabular and graphical form.

### BRIEF DESCRIPTION OF THE DRAWINGS

Figure 1. Summary flow diagram of the main steps of the methodology according to the invention described herein.
Figure 2. Flow chart, in detail, of the invention described herein.
Figure 3. Relationship between technological readiness level and time to market.

### DETAILED DESCRIPTION OF THE INVENTION

The methodology presented which supports the leading role of corporate strategy in research and development activities, consists of four sequential and interconnected steps:

### Program pre-evaluation upon submission

Program managers begin by defining data on required resources, activities, goals, and deliverables by program type and operating area. Thus, the merit and the potential for economic impact, i.e. the ability of the program being analysed to achieve the expected impact, are pre-assessed.

This deffinition will help to determine the technology readiness level (Technology Readiness Level, TRL, European Definition) versus time to market. A technology readiness level of 1 identifies that basic principles have been observed, a technological readiness level of 2 considers that the technology concept was formulated, a technological readiness level of 3 considers that an experimental proof of concept was carried out, a technology readiness level of 4 considers the technology validation at the laboratory level, a technology readiness level of 5 considers technology validation in a relevant environment, a technology readiness level of 6 considers the technology demonstration in a relevant environment, a technology readiness level of 7 considers the demonstration of the prototype system in an operational environment, a technology readiness level of 8 considers the system as complete and qualified, and a technology readiness level of 9 considers that the current system is proven in an operational environment.

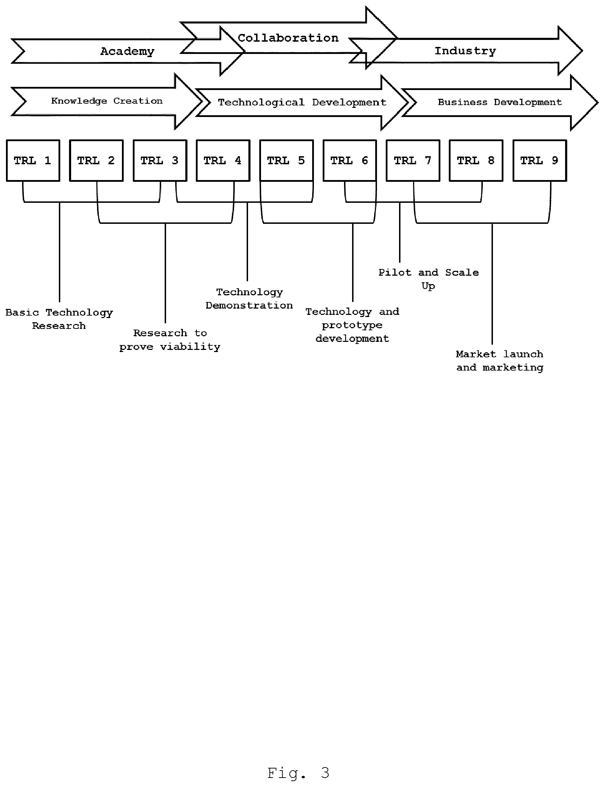

In terms of technology readiness versus time to market, and using this scheme, this invention assumes that a technology readiness level of 1-3 corresponds to a market time of 10 years or more; a technology readiness level of 4-6 corresponds to a market time of more than 5 years and finally a technology readiness level of 7-9 corresponds to a market time of less than 2 years (Figure 3) (uk-cpi.com).

The innovative aggregate impact measure proposed in the methodology described here contains metrics / indicators that assess the a) alignment and attractiveness, the b) outputs, the c) outcomes and the d) anticipated annual impact, and with a calculated value within a range of [1,5] .

The aggregate impact measure has the following formula, which gives greater weight to indicators related to knowledge co-creation: 0,30 × a) + 0,20 × b) + 0,20 × c) + 0,30 × d).

Among the possible metrics, which are adjustable to each organization, to best illustrate its innovation processes, are here proposed the following:

### a) ALIGNMENT AND ATTRACTIVITY

Strategic alignment with organizational goals;
Originality of the proposed innovation program plan;
Economic, societal and environmental relevance to the organization, sector and country;
Competence and strategic relevance of partners network in co-creating knowledge and innovation.

The set of these metrics is evaluated considering a rating from 1 to 5, where 1 corresponds to a low alignment and attractiveness, 2 corresponds to a sufficient alignment and attractiveness, 3 corresponds to a good alignment and attractiveness, 4 corresponds to a very good alignment and attractiveness and 5 corresponds a to strong alignment and attractiveness. Ratings / weights should be properly explained by the program manager.

### b) OUTPUTS

Number of publications;
Number of outreach initiatives;
Number of patents;
Number of standards, reports and technical opinions;
Number of proofs of concept;
Number of new potential business proposals (startup's, spin off's).

### c) OUTCOMES

Increased brand awareness;
Public awareness, that is, recognition by civil society;
Increasing knowledge co-created and contribution of the different innovation helices;
All these metrics are evaluated by considering a rating from 1 to 5, where 1 corresponds to a low effect level, 2 corresponds to a sufficient effect level, 3 corresponds to a good effect level, 4 corresponds to an effect level of very good and 5 corresponds to a strong effect level. The weights must be duly justified.

### d) ANTECIPATED IMPACT

Using the return on investment forecast per year;
Rights resulting from licenses;
Cost savings;
Profits.

The manager must anticipate the impact on the organization in terms of EBITDA (earnings before interest, taxes, depreciation and provisions).

The total impact, on the currency unit of each country, involving these metrics, is also characterized on a scale of 1 to 5 and should be established by the specificity and results of each organization, in advance by their managers. The following weighting of the impact of each program on the organization's EBITDA is proposed: 1 - [1%,5%]; 2 - [6%,10%]; 3 - [11%-20%]; 4 - [21%, 30%]; 5 > 31%.

Following the definition and quantification of the information enabling the definition of technological readiness versus time to market and after the calculation of the aggregate impact measure, managers should perform a tripartite risk level assessment on scientific, financial or administrative risks, risks of failure to meet targets or deliverables and risks associated with the consortium or customers. In this assessment, they must anticipate risks, propose action plans and assign a value within the range of 1 to 5. The value of 1 corresponds to a very high level of risk, the value of 2 to a high level of risk, the value to from 3 to a moderate level of risk, a value of 4 to a normal level of risk, and a value of 5 to a low level of risk.

The pre-assessment stage is then made through a three-dimensional analysis, where the three main vectors are used: technological readiness versus time to market, aggregate impact measure and level of risk. Executive Directors must make quick decisions based on this analysis.

Priority can also be given to programs through a complementary analysis during this pre-assessment phase, with the application of a three-dimensional analysis using the anticipated impact metric, the level of technological readiness versus time to market, complementing with the required resource data and with the metric alignment and attractiveness.

### Weighting the annual increment of performance evaluation key-indicators

For this purpose the following indicators are proposed:
Budget realized or year to date/ Initial annual budget, %;
Funding from external public programs / real annual costs, %;
Number of new business proposals / Annual average number of new business proposals, %;
Annual increase of the economic, social and environmental value, direct and indirect, generated by the organization's activity / Annual average value generated over the last 4 years, %;
Number of program deliverables completed / Estimated number of annual program deliverables, %;
Number of publications / Average number of annual publications, %;
Number of patents / Average number of annual patents, %;
Number of proofs of concept / Average number of annual proofs of concept, %
Number of promotion and outreach initiatives / Average number of annual promotion and outreach initiatives, %;
Total number of standards and evaluations / Annual average of total number of standards and evaluations produced.

### Program evaluation at its terminus

Upon termination of an innovation program, the program manager shall resume the pre-assessment and determine the actual performance and re-quantify the level of technology readiness versus time to market, the level of risk and the aggregate impact measure. It is possible to carry out cause-and-effect analyzes regarding the non-implementation of the program after the application of the program.

### Impact assessment of long-term program activity with a 2.5 to 5 frequency

In this medium-long term assessment and using the information already produced in the previous steps, 4 objectives, 9 key performance indicators, and 23 sub-key performance indicators are defined to be evaluated in each period.

The objectives of this assessment are quantitative and qualitative:
1- The relevance and excellence of innovation programs;
2- The innovation;
3- Diversification and competitiveness;
4- The effectiveness;

For each objective we define 9 performance evaluation key-indicators:
1.1- New knowledge and new skills produced in a co-creation immersion environment;
1.2- Accelerate the innovation process and cause-effect analysis;
1.3- Visibility and reputation;
2.1- Use of results and outcomes;
2.2- Economical, societal and environmental relevance of new knowledge produced and co-creation;
3.1- Diversification;
3.2- New business;
4.1- Organizational effectiveness (existence of written procedures);
4.2 - Economical, societal and environmental effectiveness.

Within each performance evaluation key-indicators, a total of 23 performance evaluation key-sub-indicators to be assessed were identified, when qualitatively appropriate:
1.1- New knowledge and new skills
1.1.1- New strategic partnerships within global knowledge networks involving industry-university collaborations, RTD institutes, State and civil society and the contribution of each helix;
1.1.2- Evolution of the human resources structure (HR) ;
1.1.3- Number of registered patents and thematics;
1.1.4- Number of master's and doctoral theses, scientific articles from university-industry partnerships with public and private funding;
1.2- Accelerate the Innovation Process
1.2.1- New feasibility models, pilots and demonstration programs for scaling up;
1.2.2- Time to market decrease as measured by the TRL increase in ongoing RTD programs;
1.3- Visibility and reputation
1.3.1- Outreatch initiatives and promotion;
1.3.2- Awards, certifications and other public references;
2.1- Results use and outcomes
   2.1.1- Introduction of innovations and sustainable technologies resulting from RTD (research technology development) co-promotion programs and from consulting services recommendations into industry and civil society products and processes;
2.1.2- New products, new processes, organizational innovation (eco-innovation) and societal innovation;
   2.2- Relevance of new knowledge;
   2.2.1- N. ° of technology validation studies, royalties and licenses;
   2.2.2- Aggregate impact measure evolution;
3.1- Diversification and competitiveness
3.1.1- Contribution of RTD programs co-created to change the organization income structure, sector / country;
3.1.2- Contribution of RTD Programs co-created for entering new markets and new business areas;
3.2 New business
   3.2.1- Initiatives to boost and support the creation of companies and new business coach and follow-up;
3.2.2- N. ° of economic, market feasibility studies and business exploitation plans;
4.1- Organizational effectiveness (existence of written procedures);
   4.1.1- Selection of RTD programs / partnerships and maintaining quality of R&D processes and methods;
   4.1.2- Program planning and management;
   4.1.3- Processes for generating new business;
   4.1.4- Technological diffusion processes and spillovers;
4.2 Economic and societal effectiveness;
   4.2.1- Effective human resources for research and technological development and involved in co-creation processes;
   4.2.2- RTD expenditure as a percentage of EBITDA;
4.2.3- Economic, social and environmental value generated by RTD Programs on the organization and civil society and impact on the organization as % of EBITDA.

## Claims

1. Methodology for identifying and quantifying, for innovation programs, their economic value and intangible assets created, allowing an assessment of efficiency and effectiveness, computer implemented, **characterized by** comprising the following steps:
- collection of data on required resources, activities, targets and deliverables by program type and operational area by creating alphanumeric databases in computer processing programs or spreadsheets;
- program pre-assessment by computing, through functions parameterized in computer processing programs or spreadsheets, a level of technology readiness versus time to market, an aggregate impact measure and a level of risk;
- computation, through functions parameterized in computer processing programs or spreadsheets, of an annual increment of key performance indicators evaluation towards a target;
- evaluation of the program at its terminus;
- long-term impact assessment of the program activity with a 2.5-5 year frequency;
- presentation of results computed by functions parameterized in computer processing programs or spreadsheets in a tabular and graphical form.

2. Methodology according to claim 1, **characterized by** a level of technology readiness of 1-3 corresponding to a time to market of 10 years or more, a level of technology readiness of 4-6 corresponding to a time to market more than 5 years and a level of technology readiness of 7-9 corresponding to a time to market of less than 2 years.

3. Methodology according to claim 1 or 2, **characterized in that** said aggregate impact measure includes the following metrics:
a. alignment and attractiveness, including the metrics:
- strategic alignment with organizational goals;
- originality of the proposed innovation program plan;
- economic, societal and environmental relevance to the organization, sector and country;
- competence and strategic relevance of partners network in co-creating knowledge and innovation;
b. outputs, including the metrics: number of publications, number of outreach initiatives; number of patents; number of standards, reports and technical opinions; number of proofs of concept; number of new potential business proposals;
c. outcomes, including the metrics: increased brand awareness, public awareness, increasing knowledge co-created and contribution of the innovation helices;
d. anticipated impact, including the metrics: return on investment forecast per year, rights resulting from licenses, cost savings and profits.

4. Methodology according to claim 3, **characterized in that** said metrics a) and c) are classified between 1 and 5, where 1 corresponds to a low alignment and attractiveness / effect, 2 corresponds to a sufficient alignment and attractiveness / effect, 3 corresponds to a good alignment and attractiveness / effect, 4 corresponds to a very good alignment and attractiveness / effect and 5 corresponds to strong alignment and attractiveness / effect.

5. Methodology according to claim 3, **characterized in that** said metrics d) is classified in terms of EBITDA (earnings before interest, taxes, depreciation and provisions), on the currency unit of each country, in values 1-5, where 1 corresponds to values 1 - 5 %, 2 corresponds to values 6 - 11 %, 3 corresponds to values 11 - 20 %, 4 corresponds to values 21 - 30 % and 5 corresponds to values superior to 31 %.

6. Methodology according to any of the claims 1 to 5, **characterized in that** said aggregate impact measure is calculated by the formula: 0,30 × a) + 0,20 × b) + 0,20 × c) + 0,30 × d) .

7. Methodology according to any of the claims 1 to 6, **characterized in that** said level of risk is classified in values 1 - 5, where 1 corresponds to a classification of a very high level of risk, 2 corresponds to a classification of a high level of risk, 3 corresponds to a classification of a moderate level of risk, 4 corresponds to a classification of a normal level of risk and 5 corresponds to a classification of a low level of risk.

8. Methodology according to any of the claims 1 to 7, **characterized in that** said program pre-assessment includes a tridimensional analysis, using as vectors the technological readiness versus time to market, the aggregate impact measure and the level of risk.

9. Methodology according to any of the claims 1 to 8, **characterized in that** said program pre-assessment includes a program prioritization using the anticipated impact metric, the alignment and attractiveness metric, the level of technological readiness versus time to market and required resources data.

10. Methodology according to any of the claims 1 to 9, **characterized in that** said computation of an annual increment of performance evaluation key-indicators includes the following indicators:
Budget realized or year to date / Initial annual budget, %;
Funding from external public programs / real annual costs, %;
Number of new business proposals / Annual average number of new business proposals, %;
Annual increase of the economic, social and environmental value, direct and indirect, generated by the organization's activity / Annual average value generated over the last 4 years, %;
Number of program deliverables completed / Estimated number of annual program deliverables, %;
Number of publications / Average number of annual publications, %;
Number of patents / Average number of annual patents, %;
Number of proofs of concept / Average number of annual proofs of concept, %;
Number of promotion and outreach initiatives / Average number of annual promotion and outreach initiatives, %;
Total number of standards and evaluations / Annual average of total number of standards and evaluations produced.

11. Methodology according to any of the claims 1 to 10, **characterized in that** said evaluation of the program at its terminus includes the re-computation of the level of technology readiness versus time to market, of the aggregate impact measure and of the level of risk.

12. Methodology according to any of the claims 1 to 11, **characterized in that** said long-term impact assessment of the program activity with a 2.5-5 year frequency includes the definition of 4 objectives, 9 key performance indicators and 23 sub-key performance indicators.
